# EUROPEAN PATENT APPLICATION

(11) **EP 2 589 482 A1**
(43) Date of publication of application: **08.05.2013**
(21) Application number: 11800576.8
(22) Date of filing: 06.06.2011
(51) Int. Cl.: B29C 47/88, B29C 47/14, B29L 7/00

(54) **FILM PRODUCTION DEVICE AND PRODUCTION METHOD**

(30) Priority: 30.06.2010 JP 2010149070
(71) Applicant: Toyo Kohan Co., Ltd., Tokyo 102-8447 (JP)
(72) Inventor: INAZAWA Hiroshi, Kudamatsu-shi, Yamaguchi 744-8611 (JP); FUKUI Go, Kudamatsu-shi, Yamaguchi 744-8611 (JP); NAKAMURA Takuji, Kudamatsu-shi, Yamaguchi 744-8611 (JP); FUJII Tadashi, Tokyo 102-8447 (JP)
(74) Representative: Grosse, Rainer
(86) International application number: PCT/JP2011/062928
(87) International publication number: WO 2012/002108

(57) **Abstract**

Provided is a film production apparatus and a method for producing film capable of exerting a good effect of preventing necking-in by minimizing the length of molten resin after extrusion through a die exit and before a contact with the surface of a chill roll. A film production apparatus configured to take up molten resin extruded downward from an exit bored in a die by a rotating chill roll located below the exit and to cool the molten resin for solidification by the chill roll to produce a film further includes a fluid providing unit that provides fluid to a space between the exit and the chill roll located below. The film production apparatus is configured to apply fluid pressure in a direction pushing back the molten resin existing in the space against displacement of the molten rein taken up in a rotational direction of the chill roll.

## Description

### TECHNICAL FIELD

The present invention relates to a film production apparatus to produce film by extruding molten resin through a die while taking up by a chill roll and to a method for producing film.

### BACKGROUND ART

It is generally known that molten resin extruded from an exit of a die or a mold undergoes elongational flow deformation in a space (air gap) before coming into contact with a chill roll located below so that a shape thereof is formed on a free surface. During this elongational flow deformation, the molten resin frequently shows the behavior called necking-in to reduce its width.

Since this necking-in makes the film relatively thicker at the edges than at the central part, such relatively thick areas on both ends of the film are trimmed for removal after casting, and the film then is rewound as a final product. As a result, the width of the film having large degree of necking-in will be narrow inevitably, and so the amount of resin to be trimmed for removal increases, thus increasing the amount of wasted raw material resin and becoming a factor of degrading the usage efficiency of the resin.

The following describes this necking-in of molten resin in more details. This necking-in occurs after a contact of the molten resin extruded through the die exit with the chill roll and before cooling of the resin for solidification. Strictly speaking, the occurrence of this necking-in results from a difference in flow form of the molten resin as follows.

That is, molten resin flows at a central part (the part as a product) of the film with a fixed width in the form of planar elongation flow so that a force acts not only in the longitudinal direction but also in the width direction.

On the other hand, the resin flows at both ends of the film in the form of uniaxial elongational flow where the rein shrinks freely, and additionally receiving a force from the flow in the width direction of the planar elongational flow of the film central part, necking-in occurs. This necking-in generates a distribution in thickness in the width direction of the film and the film shrinks freely at both ends, so that the both ends become thick partially.

Further at boundary between the uniaxial elongational flow at the both ends and the planar elongational flow at the central part, the both ends of the film receive pressure from these flows and may become thinner.

Film obtained by the conventional film production method will have a width dimension as the final product width subjected to trimming for removal at such uneven parts in thickness of the both ends of the film, and so the film has a problem of poor usage efficiency of the resin as stated above. Note here that the amount of this necking-in tends to increase with the duration when the molten resin is in an unconstrained state after the die exit and before a contact with the chill roll, and that amount tends to increase until the completion of solidification on the chill roll.

In this way, the necking-in may be decreased by shortening the spatial distance between the die exit and the chill roll, i.e., the length of the air gap. However, considering the tip end shape of the die exit and the arrangement of the chill roll, for example, there is a geometric limit to shorten the spatial distance.

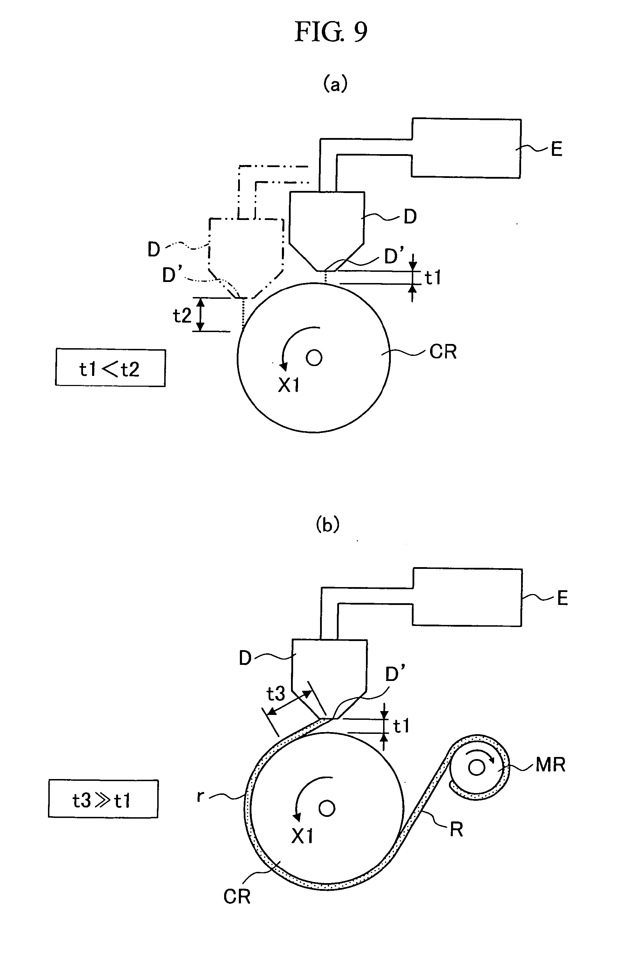

Then as illustrated in Fig. 9a, an exit D' of a die D leading to an extruder E is located above the apex of a chill roll CR, whereby the spatial distance: t1 between the exit D' and the chill roll CR can be shortened. That is, the spatial distance: t1 is shorter than the spatial distance: t2 in another arrangement of the die D as indicated with the chain double-dashed line in the drawing.

For the film forming, however, as illustrated in Fig. 9b, the molten resin is taken up in the rotational direction (X1 direction) of the chill roll CR, and in other words, the molten resin is taken up in a direction inclined toward the rotational direction from the vertically downward by a tensile force trying to take up the resin in the tangential direction of the chill roll CR, and therefore the actual length of the molten resin in the air gap (spatial length: t3) becomes significantly longer than the aforementioned spatial length: t1. Further, such tension acting on the molten resin in the slanting direction increases a tendency of build-up (resin adherence) to adhere to the die exit, or streaky deficiencies occur on the surface of the film, thus causing a quality issue. Setting the t1 still shorter, then the resin will become closer to the form of being taken up in the direction orthogonal to the vertical downward. In that case, however, the swelling molten resin will come into contact with the die exit, causing a problem of a failure in the film production. In this drawing, film R obtained by cooling the molten resin for solidification will be rewound around a wind-up roll MR.

As a technique of suppressing such necking-in, Patent Document 1 discloses a technique of pressing molten resin in contact with a chill roll at both ends using an air nozzle, constraining the both ends against the surface of the chill roll using Coulomb force by electrical static charge or using both of them.

Such a technique, however, suppresses necking-in after molten resin comes into contact with the chill roll, and therefore a good effect of suppressing necking-in is hardly expected actually, and the effect of suppressing necking-in is significantly inferior to that obtained from the case where the spatial distance between the die exit and the chill roll is minimized as stated above.

Further when the rolled surface of the molten resin in contact with the chill roll that is to be cooled for solidification is uneven, the formed film will generate local distortion, a variation in amount of elongation and a distribution in thickness, and moreover the orientation distribution of the resin also deteriorates. The film may further generate unevenness in appearance, resulting from a variation in surface roughness of the rolled surface called air irregularities. These problems can be solved by increasing the adhesion between the molten resin and the chill roll to make the properties of the film uniform, including the thickness distribution and the like.

As for the increase of adhesion between the molten resin and the chill roll, Patent Document 2 discloses a technique of increasing the adhesion between them by using electrical static charge. This technique uses a wire electrode to apply the electrical static charge, and when the electrode is provided in the vicinity of the die exit, discharge will occur toward the die, and so a good effect of shortening air gap cannot be expected. As methods of securing the adhesion, the distance between the molten resin and the electrode may be narrowed, or a voltage may be increased. In the case of these methods implemented, a discharge crater may be left in the film, and there is a problem of difficulty in setting an operational condition as well. Further, this technique is based on the assumption that an electrifiable resin has to be used to form the film, and there is another problem of significantly limiting the types of resins that can be used.

Patent Document 3 discloses another technique of increasing the adhesion between the molten resin and the chill roll by using air pressure. More specifically, air dynamic pressure is allowed to directly collide with the resin using an air nozzle. Such direct collision of the air dynamic pressure with the resin increases the amount of leakage of air to the mold side, causing vibration of the molten resin called film wobbling or forcing extremely difficult operational adjustment to obtain uniform film as a whole using a cooled mold.

Further as disclosed by Patent Document 4, there is still another technique of preventing trapping of air between the molten resin and the chill roll using a suction chamber forming a negative pressure therein, thus securing adhesion between them.

Patent Documents 5 and 6 further disclose a technique of using an air chamber. However, these techniques are targeted to prevent the leakage of air to the mold side to avoid the film wobbling, and not to form an air layer to the mold side positively. Moreover these air chambers increase their effects as the pressure therein increases. However actually the amount of air leaking to the mold side will increase with the pressure, which becomes a factor of film wobbling of the molten resin in the air gap and limits the pressurization condition in the chamber.

As stated above, it has been desired in the technical field to develop a technique capable of exerting a good effect of preventing necking-in by minimizing the length (spatial distance) of the molten resin after extrusion through the die exit and before a contact with the surface of the chill roll.

It has been also desired to develop a technique capable of producing film with uniform overall film properties including thickness distribution by securing good adhesion between the molten resin and the chill roll and performing the cooling for solidification quickly.
Patent Document 1: JP Patent Publication (Kokai) No. 2006-27133
Patent Document 2: JP Patent Publication (Kokai) No. 11-58498(1999)
Patent Document 3: JP Patent Publication (Kokoku) No. 41-19706(1966)
Patent Document 4: JP Patent Publication (Kokai) No. 2002-178389
Patent Document 5: JP Patent Publication (Kokai) No. 8-258117(1996)
Patent Document 6: JP Patent Publication (Kokai) No. 2000-254958

### DISCLOSURE OF THE INVENTION

### PROBLEM TO BE SOLVED BY THE INVENTION

In view of the aforementioned problems, it is an object of the invention to provide a film production apparatus and a method for producing a film capable of exerting a good effect of preventing necking-in by minimizing the length of molten resin after extrusion through a die exit and before a contact with the surface of a chill roll.

### MEANS FOR SOLVING THE PROBLEM

In order to fulfill the aforementioned object, a film production apparatus of the present invention is configured to take up molten resin extruded downward from an exit bored in a die by a rotating chill roll located below the exit and to cool the molten resin for solidification by the chill roll to produce a film. The film production apparatus further includes a fluid providing unit that provides fluid to a space between the exit and the chill roll located below, and the film production apparatus is configured to apply fluid pressure in a direction pushing back the molten resin existing in the space against displacement of the molten rein taken up in a rotational direction of the chill roll.

The production apparatus of the present invention includes a fluid providing unit to provide fluid such as pressure air in a space (air gap) between the die exit and the chill roll located below, and is configured to push back the molten resin, which is extruded from the exit and comes into contact with the rotating chill roll and is about to deform in a slanting direction, for example, by being pulled in the rotational direction of the chill roll, using the pressure of the fluid provided in the space, thus minimizing the length of the molten resin in the space.

The relative position between the die exit and the chill roll is not limited especially, and as illustrated in Fig. 9a, the exit may be provided above the apex of the chill roll, or as illustrated with the chain double-dashed line in the drawing, the exit may be provided at a position closer to the rotational direction side of the chill roll from the above of the apex. Even in any form of these relative positional relationships between the die exit and the chill roll, the fluid providing unit should be provided so that the pressure of the fluid provided from the fluid providing unit acts on the molten resin so as to push back the deformation of the molten resin by being pulled by the rotating chill roll.

For instance, by pushing back the molten resin, which is about to extend in the slanting direction toward the rotational direction of the chill roll, by the pressure of the fluid, the length of the molten resin elongating without constraint can be minimized, which leads to effective suppression of necking-in during cooling for solidification of the molten resin on the surface of the chill roll. Accordingly the trim margin of the formed film ends (ear parts) or trim-less thereof are enabled, and the wasted amount of the resin used can be reduced, that is, the usage efficiency of the resin can be improved.

Herein, exemplary forms of the fluid providing unit are as follows.

In one of the forms, the fluid providing unit at least includes a fluid chamber, the fluid chamber including a flow channel and a tubular part therearound, the fluid chamber is provided to have a gap with the chill roll while letting a part of an end face of the tubular part thereof face the space, and fluid discharged from the flow channel flows through the gap and flows between the molten resin existing in the space and the part of the end face of the tubular part so as to apply the fluid pressure to the molten resin existing in the space.

In the fluid providing unit of this form, when the tubular part making up the fluid chamber such as an air chamber has a rectangular frame-form end face, for example, an upper region of this rectangular frame form corresponds to the "part of the end face of the tubular part" and faces the aforementioned space between the exit and the chill roll. Then, while fluid discharged from the flow channel of the fluid chamber flows upward along the gap between the fluid chamber and the chill roll, and further flows upward along the part of the end face of the fluid chamber, fluid pressure is applied to the molten resin that is about to deform in the rotational direction of the chill roll, whereby the molten resin provided from the exit to the chill roll can be continuously pushed back and the length of the molten resin in the space can be minimized. Herein, adjustment of the thickness of the aforementioned gap can increase the flow channel resistance for the fluid flowing through this gap, and so the flow amount of air is narrowed and the flowing air controls the flow along the flowing direction, thus preventing wobbling of the molten resin in the space as well.

In another form of the fluid providing unit, a separate flow channel may be bored in the tubular part so as to be in fluid communication with a part of the end face of the tubular part of the fluid chamber, and fluid may be discharged from the part of the end face of the tubular part via the separate flow channel so as to directly apply the fluid pressure to the molten resin existing in the space. According to the fluid providing unit of this form, fluid pressure can be applied to the molten resin in the space more stably.

In the fluid providing unit of this form, fluid discharged from the flow channel presses the molten resin taken up by the chill roll against the chill roll, whereby high degree of adhesion between the molten resin and the chill roll can be promoted at the initial stage during the cooling for solidification of the molten resin on the chill roll (initial state after the molten resin comes into contact with the chill roll), and the molten resin can be quickly cooled for solidification.

This means that film having a similar width to that of the extruded molten resin can be surely produced. This is because the elongational flow form of the molten resin extruded from the exit of the die can undergo planar elongational flow as stated above across almost the entire width. Further, the fluid provided from the fluid chamber presses the molten resin against the chill roll quickly so as to bring them into close contact for cooling for solidification, whereby an effect of suppressing necking-in as stated above can be further improved.

In still another form of the fluid providing unit, the fluid providing unit at least includes a fluid chamber, the fluid chamber including a flow channel and a tubular part therearound, the fluid chamber is provided to have a gap with the chill roll while letting the flow channel thereof face the space, and fluid discharged from the flow channel directly applies the fluid pressure to the molten resin existing in the space.

In the fluid providing unit of this form, the flow channel to discharge fluid directly faces the space between the exit and the chill chamber, and directly provides fluid to the molten resin extruded downward from the exit of the die to apply fluid pressure thereto.

In aforementioned any form of the fluid providing unit, it is desirably that the fluid pressure of the fluid be controlled so as to minimize the length of the molten resin existing in the space.

For instance, prior to the film formation, the fluid pressure making the length of the molten resin in the space the shortest may be found in advance, and then the fluid giving the set fluid pressure to the molten resin may be provided, whereby an extremely good effect of suppressing necking-in can be exerted.

Herein in the form where the die exit is provided above the apex of the chill roll, the length of the molten resin in the space can be minimized by adjusting the fluid pressure so that the molten resin extends vertically downward. In another form where the die exit is provided at a position closer to the rotational direction side of the chill roll from the above of the apex, the molten resin may be pushed back in the direction opposite to the rotational direction so as to deform and be inclined, whereby the length of the molten resin in the space can be minimized. In this way, depending on the relative providing positional relationships between the die exit and the chill roll, the extending form of the molten resin in the space to specify the shortest distance thereof will be varied.

Then, based on the present inventor's experimental rule, it was found that a better effect of preventing necking-in can be obtained by adjusting the spatial length of the molten resin to be 15 mm or less.

The present invention further covers a method for producing film. This method is for producing a film by taking up molten resin extruded downward from an exit bored in a die by a rotating chill roll located below the exit and cooling the molten resin for solidification by the chill roll, and includes the steps of: providing fluid to a space between the exit and the chill roll located below; and taking up the molten resin by the chill roll while applying fluid pressure in a direction pushing back the molten resin existing in the space against displacement of the molten rein taken up in a rotational direction of the chill roll.

In the above method, a fluid chamber including a flow channel and a tubular part therearound may be provided to have a gap with the chill roll while letting a part of an end face of the tubular part thereof face the space, and fluid discharged from the flow channel may be allowed to flow through the gap and flow between the molten resin existing in the space and the part of the end face of the tubular part so as to apply the fluid pressure to the molten resin existing in the space. Alternatively fluid may be discharged from the part of the end face of the tubular part via a separate flow channel bored in the tubular part so as to directly apply the fluid pressure to the molten resin existing in the space.

A fluid chamber including a flow channel and a tubular part therearound may be provided to have a gap with the chill roll while letting the flow channel thereof faces the space, and fluid discharged from the flow channel may directly apply the fluid pressure to the molten resin existing in the space.

The fluid pressure of the fluid preferably is controlled so that the molten resin existing in the space has a shortest length, and the space between the die exit and the chill roll and the fluid pressure are preferably adjusted so that the molten resin existing in the space has a length of 15 mm or less.

### EFFECTS OF THE INVENTION

As can be understood from the above description, according to the film production apparatus and such a production method of the present invention, the film production apparatus further includes a fluid providing unit that provides fluid to a space between the exit and the chill roll located below, and the film production apparatus is configured to apply fluid pressure in a direction pushing back the molten resin existing in the space against displacement of the molten rein taken up in a rotational direction of the chill roll. With this configuration, the length of molten resin existing in the space can be minimized, and so a good effect of preventing necking-in can be exerted.

### BRIEF DESCRIPTION OF THE DRAWINGS

Fig. 1 schematically illustrates one embodiment of a film production apparatus of the present invention.
Fig. 2 is an enlarged view of part II of Fig. 1, illustrating a space between a die exit and a chill roll and one embodiment of a fluid providing unit to explain the state where fluid pressure acts in the direction pushing back the deformation of molten resin in the space between the die exit and the chill roll.
Fig. 3 describes an extending form of the molten resin where the deformation thereof is not pushed back in the space between the die exit and the chill roll, and another extending form of the molten resin where the spatial length thereof becomes the shortest.
Fig. 4 illustrates a production apparatus provided with a fluid providing unit that is another embodiment.
Fig. 5 describes a production apparatus provided with a fluid providing unit that is still another embodiment.
Fig. 6 schematically illustrates a conventional film production apparatus that was used for the experiment to measure the thickness distribution in the width direction and the thickness distribution in the longitudinal direction (conveyance direction by the chill roll) of the formed film.
Fig. 7(a) shows a measurement result of the thickness distribution in the width direction of the film that is produced by the production apparatus of the present invention, and (b) shows a measurement result of the thickness distribution in the width direction of the film that is produced by the conventional production apparatus.
Fig. 8(a) shows a measurement result of the thickness distribution in the longitudinal direction of the film that is produced by the production apparatus of the present invention, and (b) shows a measurement result of the thickness distribution in the longitudinal direction of the film that is produced by the conventional production apparatus.
Fig. 9(a) describes the state where a spatial distance between the die exit and the chill roll differs with the relative positional relationships between them, and (b) describes the state where the length of the molten resin in the space become longer by being pulled by the rotation of the chill roll in the production apparatus including the die exit provided vertically above the chill roll.

### BEST MODE FOR CARRYING OUT THE INVENTION

The following describes a film production apparatus and a method for producing film of the present invention, with reference to the drawings.

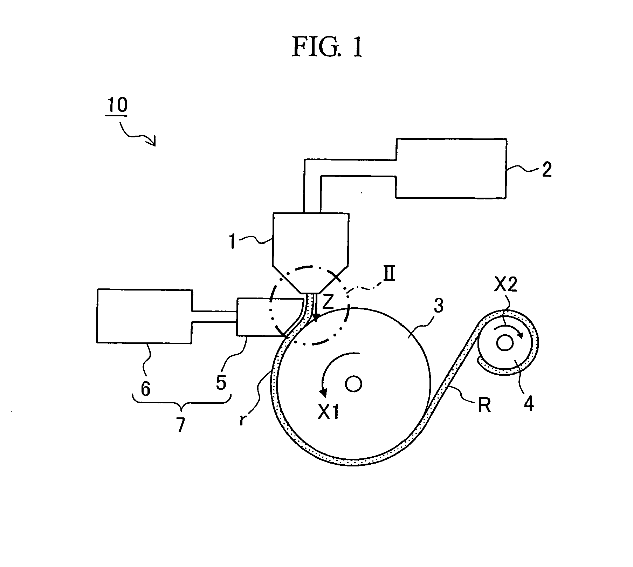

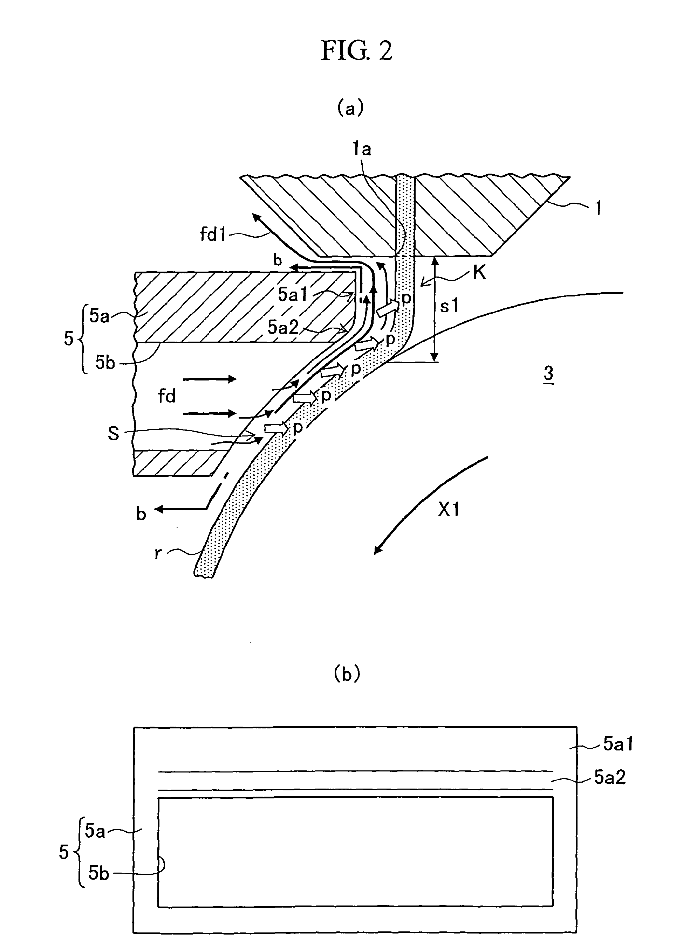

Fig. 1 schematically illustrates one embodiment of a film production apparatus of the present invention, and Fig. 2 is an enlarged view of part II of Fig. 1, illustrating a space between a die exit and a chill roll and one embodiment of a fluid providing unit to explain the state where fluid pressure acts in the direction pushing back the deformation of molten resin in the space between the die exit and the chill roll.

A production apparatus 10 illustrated roughly includes: an extruder 2 that extrudes molten resin; a die 1 communicating with the extruder 2 and including an exit 1a with a predetermined width; a chill roll 3 located below the die 1, which is rotatable (X1 direction) at the predetermined number of revolutions; a fluid providing unit 7 that provides fluid to molten resin r extruded (Z direction) extruded through the exit 1a; and a wind-up roll 4 that rewinds (X2 direction) film R obtained by cooling the molten resin r for solidification at the chill roll 3.

The fluid providing unit 7 includes a compressor 6 that forms pressure air and an air chamber 5 that provides the pressure air.

As illustrated in Fig. 2b, the air chamber 5 includes a tubular part 5a in a rectangular frame form and a central flow channel 5b, and as illustrated in Fig. 2a, the air chamber 5 has a shape that is complementary to that of the chill roll 3 at a lower part of the end face facing the chill roll 3 and has a curved part 5a2 and a flat part 5a1 defining a vertical face at an upper part.

Then, these continuous curved part 5a2 and flat part 5a1 face space K where the molten resin r extruded through the exit 1a of the die 1 comes into contact with the chill roll 3.

The pressure air fd generated by the compressor 6 is provided through the flow channel 5b to the molten resin r on the surface of the chill roll 3, and then flows upward along a gap S between the molten resin r and the air chamber 5 while giving the fluid pressure p to the molten resin r.

The pressure air fd flowing upward flows upward along the curved part 5a2 and the flat part 5a1 while giving the fluid pressure p to the molten resin r extending from the exit 1a to the below space K during the course of flowing, and flows out through the gap between the die 1 and the air chamber 5 (flowing-out air fd1).

Herein the fluid pressure p by the pressure air fd is adjusted so that the molten resin r extruded through the exit 1a and coming into contact with the rotating chill roll 3 extends vertically in this space K as illustrated in the drawing, and in this case, the length (spatial length) of the molten resin r in the space K is s1.

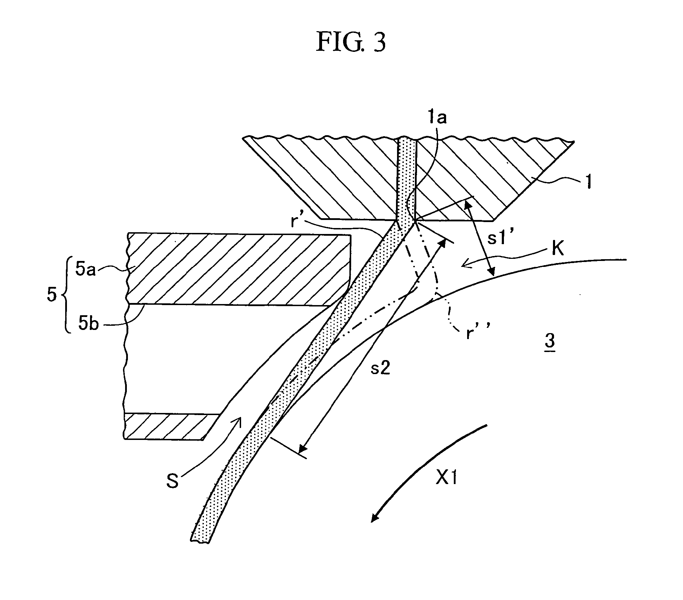

If the fluid pressure by the pressure air is not given to the molten resin r in the space K, the molten resin will be extended in the space K as in the molten resin r' as indicated with the solid line in Fig. 3 where the resin is pulled in the rotational direction by the rotation of the chill roll 3 and is displaced in a slanting direction. Then, the length of the molten resin r' in the space K will be s2, which is significantly longer than the length s1.

Against the displacement of the molten resin r in this space K in the rotational direction by being pulled from the chill roll 3, the fluid pressure p acts on the molten resin r in the direction pushing back this displacement as illustrated in the drawing, whereby molten resin r with a shorter spatial length can be formed in the space K and a good effect of suppressing necking-in can be exerted.

Herein it is preferable to, for the purpose of adjustment of the fluid pressure p, find the fluid pressure beforehand to form the molten resin r extending vertically in the space K under a condition of a predetermined number of revolutions of the chill roll 3 and a predetermined extrusion rate condition of the molten resin in the relative arrangement positional relationship of the exit 1a and the chill roll 3 as illustrated. Then, the molten resin is cooled for solidification in a suppressed manner through the extrusion of the molten resin at the predetermined extrusion rate and the rotation of the chill roll 3 at the predetermined number of revolutions, while always providing the found fluid pressure p to the molten resin r, and the film R that can be obtained by cooling the molten resin r for solidification is rewound by the wind-up roll 4, whereby the film R with suppressed necking-in can be produced.

Herein the fluid pressure p, the number of revolutions of the chill roll 3, the extrusion rate of the molten resin and the like can be adjusted using a control computer not illustrated. The illustrated apparatus may be provided with a CCD camera or a video camera as needed so that the extending posture (vertical direction and the like) of the molten resin in the space K becomes visible. Then when the chill roll is rotated at the predetermined number of revolutions and the molten resin is extruded at the predetermined extrusion rate, for example, the extending posture of the molten resin in the space may be monitored with the video camera or the like, and the fluid pressure of the pressure air can be adjusted so that the extending posture of the molten resin in the space can be a desired posture by visually checking an image of this monitor.

Meanwhile, the spatial length s1 of the molten resin r in the space K extending vertically in Fig. 2a is not the shortest spatial length that can be formed under the conditions of the drawing.

That is, as illustrated in Fig. 3, molten resin r" indicated with the chain double-dashed line in the drawing, extending in a slightly backwardly slanting direction of the rotational direction from the aforementioned vertical direction will have the shortest spatial length (spatial length s1'). Therefore, the film is produced while providing the fluid pressure so as to form such molten resin r", whereby a better effect of suppressing necking-in can be exerted.

Note here that, in order to form the molten resin r", the end face of the tubular part has to be shaped so as to be along the molten resin r". In order to prevent the adhesion of resin build-up at the die exit, the molten resin in the space desirably extends horizontally with respect to the vertical downward from the die exit to the chill roll. That is, the form of the molten resin r" indicated with the chain double-dashed line in Fig. 3 will be selected depending on the aforementioned necking-in suppression effect and the degree of resin build-up at the die exit.

The molten resin r may be pushed against on the chill roll 3 quickly for intimate contact by the fluid pressure p from the pressure fluid fd provided from the air chamber 5 and may be cooled for solidification, whereby the film produced securely can have the width similar to the width of the extruded molten resin r.

Herein the resin materials to form film are not especially limited, and polyolefin, polyester, polyamide and their modifications and mixtures can be used, which are thermoplastic resins showing flowability by heating, for example.

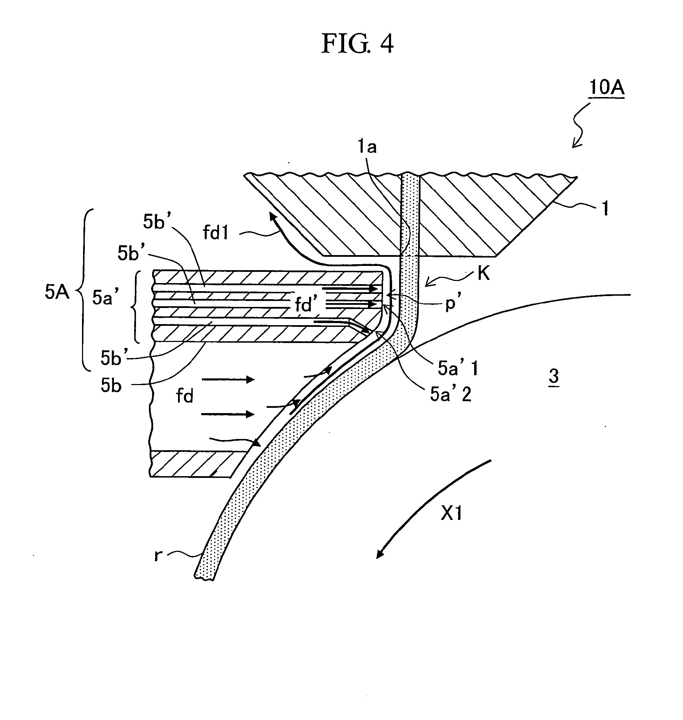

Fig. 4 illustrates a production apparatus provided with a fluid providing unit that is another embodiment. A production apparatus 10A illustrated includes an air chamber 5A having a flow channel 5b' that is bored separately from a flow channel 5b at a thick internal part of a tubular part 5a'. This air chamber 5A is configured to give pressure air fd' directly to the molten resin r from a flat part 5a'1 and a curved part 5a'2 of the tubular part 5a' making up the air chamber 5A, in addition to the discharge of the pressure air fd from the flow channel 5b, and in this respect the air chamber 5A is different from the air chamber 5 illustrated in Fig. 2.

Similarly to the fluid pressure p by the pressure air fd discharged from the air chamber 5, fluid pressure p' by the pressure air fd' supplied from the flow channel 5b' directly acts against the displacement of the molten resin r in the rotational direction by being pulled by the chill roll 3 in a direction pushing back the displacement.

Herein since the pressure air fd' discharged from the flow channel 5b' directly acts on the molten rein r, the tubular part 5a' including the flow channel 5b' bored therein preferably is made of a material having a large pipeline resistance such as a porous material.

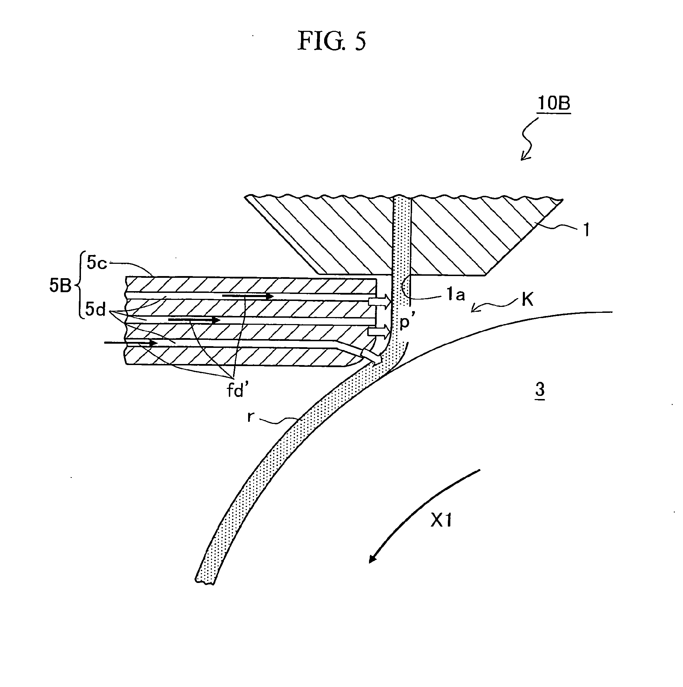

Fig. 5 describes a production apparatus provided with a fluid providing unit that is still another embodiment. The illustration of a wind-up roll, a compressor and the like are omitted. An air chamber 5B making up a fluid providing unit of a production apparatus 10B illustrated includes a tubular part 5c and a plurality of flow channels 5d bored therein, where the plurality of flow channels 5d faces a space K between an exit 1a and a chill roll 3.

Since the flow channels 5d face the space K, pressure air fd' is directly provided to molten resin r extruded from the exit 1a and fluid pressure p' is directly applied to the molten resin r so that molten rein r can be formed so as to extend vertically as illustrated by being pushed back.

### [Experiments to measure thickness distribution in width direction and thickness distribution in longitudinal direction (conveyance direction by chill roll) of formed film and experimental results]

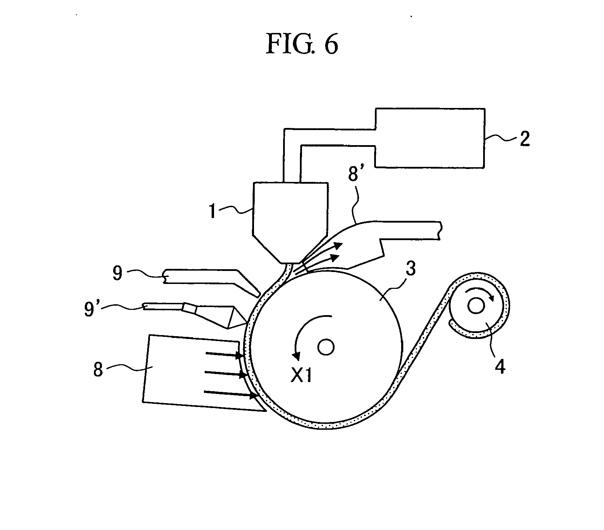

The present inventors conducted produced films of Example and Comparative Example using the production apparatuses of the present invention of Figs. 1 and 2 and a conventional production apparatus of Fig. 6 and conducted an experiment to measure a thickness distribution in the width direction and a thickness distribution in the longitudinal direction (conveyance direction by the chill roll) of these films.

Firstly with reference to Fig. 6, the conventional production apparatus used in this experiment is described briefly. This production apparatus includes an air chamber 8 and a suction chamber 8' to prevent uneven chilling, and includes an air nozzle 9 and an edge pinning 9' to constrain film edges to prevent shrinkage of the film width on a chill roll 3.

In this experiment, isophthalic acid copolymerized polyethylene terephthalate (isophthalic aid 15 mol%) was used as a resin material. The extruder used was a twin screw extruder with φ65mm, the die used was a single-layer coat hanger type T-die of 1,500 mm in width, and the chill roll used was of φ600mm. The amount of molten resin extruded was 100 kg/hr, the extrusion temperature was 260°C and the chill roll temperature was 40°C.

Since the width of the air chamber has to be set larger than the die width, the air chamber used had a width of 1,530 mm, and the internal pressure of the air chamber was 5,000 Pa. Then the gap S in Fig. 2 where the pressure air goes upward was 2 mm or less (desirably 0.5 mm or less is better). This value of the gap S of 2 mm or less (desirably 0.5 mm or less) was easily achieved because the molten resin planar-elongated across the almost entire width from the die exit so that both ends also did not become thick but remained thin. Then, in Example as well, since the length of the air gap was shortened, the molten resin was brought into intimate contact with the chill roll immediately after the contact with the chill roll and the molten resin was constrained to the roll surface by chilling, the film was formed in the form of planar elongational flow across almost the entire width.

Since the thickness of the gap was set within this width range, flow channel resistance for the fluid flowing through this gap becomes large, and so the flow amount of air is narrowed and the flowing air controls the flow along the flowing direction, so that the molten resin in the space does not wobble.

The spatial length of the molten resin was set at 15 mm. This is based on the present inventor's experimental rule that the effect of preventing necking-in can be further improved when the spatial length was adjusted to be 15 mm or less. The radius of the curvature of the curved part forming a non-contact conveyance face of the molten resin was 5 mm. The part with this radius of curvature will have the highest pressure when pushing back the molten resin. Although a small radius of curvature can decrease the length of the air gap, higher pressure will be required.

The conventional production apparatus of Fig. 6 had the same spatial length in the vertical direction between the die exit and the chill roll as that of Example. In Comparative Example, however, the molten resin extruded from the die was taken up in the rotational direction of the chill roll, and the actual air gap was about 30 mm. In order to prevent the film wobbling, the air chamber 8 and the suction chamber 8' were set at 50 Pa and -15 Pa, respectively, and the output from the edge pinning 9' was 12 kV and 0.15 mA.

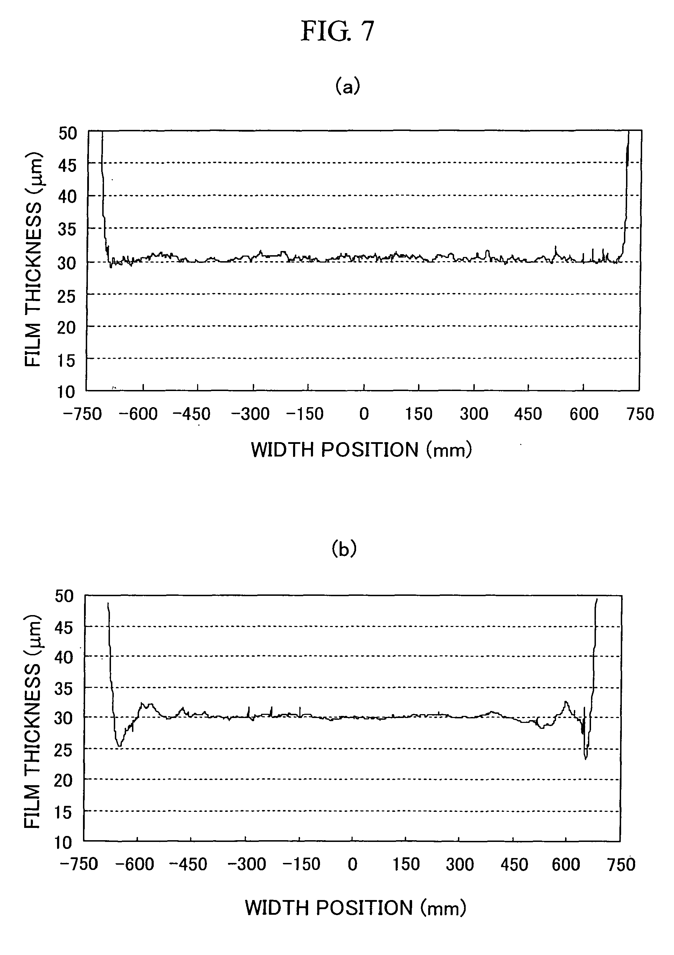

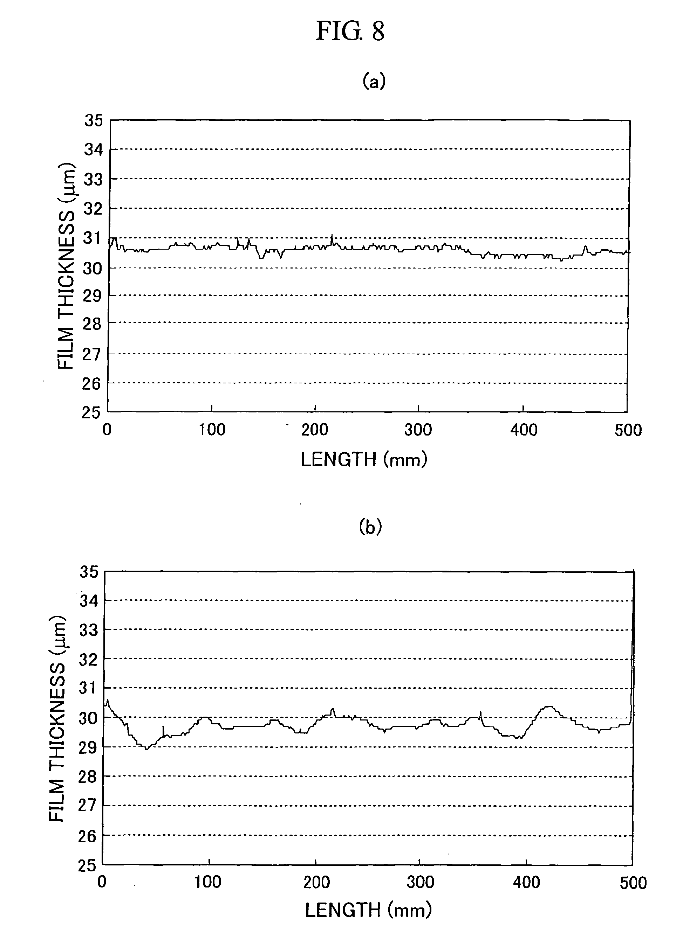

Fig. 7a and Fig. 7b show measurement results of thickness distributions in the width directions of the films of Example and Comparative Example, respectively, and Fig. 8a and Fig. 8b show measurement results of thickness distributions in the longitudinal directions of the films of Examples and Comparative Examples, respectively. As for thickness distribution data illustrated for Example and Comparative Example, the film formation rate was 30 mpm, and the thickness thereof was about 30 µm.

From Fig. 7b, the length of the flat part of the film as Comparative Example was about 1,200 mm, and so the production width obtained was near the value subtracted 300 mm from the width of the T-die. In this Comparative Example, since film edges were constrained, it was found that the film was thick at the outermost edges that undergo uniaxial elongational flow and was partially thinner at the boundary with the central film production part that undergoes planar elongational flow.

On the other hand, from Fig. 7a, the length of the flat part of the film as Example was about 1,400 m, and so the production width obtained was near the value subtracted 100 mm from the width of the T-die.

Necking-in was slightly found at the outermost edges, but the molten resin extruded from the die showed planar elongational flow across almost the entire width, and the maximum product width was significantly wider than that of Comparative Example.

In this way, the production apparatus and the production method of the present invention can significantly increase the maximum product width of film produced using dies having the same width, and so the edge trimming margin can be reduced significantly. Then, such an effect can be made larger as the spatial length between the die exit and the chill roll becomes shortened. Further it can be considered that such an effect becomes larger because quick adhesion can be realized after the molten resin comes into contact with the chill roll.

Comparing Figs. 8a and b, a variation in thickness of the film was less in the film of Example than in the film of Comparative Example, and the film of Example showed a favorite result. From this, it was found that the air flow amount by the pressure air provided from the air chamber and going upward was narrowed so as not to generate film wobbling and the flow was controlled so as to be along this air flow.

A still shortened spatial length between the die exit and the chill roll makes the length of molten resin elongated without constraint shorter, and therefore a variation in thickness in the longitudinal direction can be made smaller.

These experimental results show that the film produced by the production apparatus and the production method of the present invention had excellent uniformity for the thickness and orientation of the film and in all respects of the appearance compared with that produced by the conventional production apparatus and such a production method.

Although that is a detailed description of the embodiments of the present invention with reference to the drawings, the specific configuration is not limited to the above-stated embodiments, and it should be understood that we intend to cover by the present invention design modifications without departing from the spirits of the present invention.

### DESCRIPTION OF REFERENCE NUMBERS

1: Die
1a: Exit
2: Extruder
3: Chill roll
4: Wind-up roll
5, 5A, 5B: Air chamber (fluid chamber)
5a, 5a': Tubular part
5a1: Flat part
5a2: Curved part
5b, 5b': Flow channel
6: Compressor
7: Fluid providing unit
10, 10A, 10B: Production apparatus
fd, fd': Fluid
K: Space
p, p': Fluid pressure
r, r', r": Molten resin
R: Film

## Claims

1. A film production apparatus configured to take up molten resin extruded downward from an exit bored in a die by a rotating chill roll located below the exit and to cool the molten resin for solidification by the chill roll to produce a film,
wherein
the film production apparatus further comprises a fluid providing unit that provides fluid to a space between the exit and the chill roll located below, and
the film production apparatus is configured to apply fluid pressure in a direction pushing back the molten resin existing in the space against displacement of the molten rein taken up in a rotational direction of the chill roll.

2. The film production apparatus according to claim 1, wherein
the fluid providing unit at least comprises a fluid chamber, the fluid chamber including a flow channel and a tubular part therearound,
the fluid chamber is provided to have a gap with the chill roll while letting a part of an end face of the tubular part thereof face the space, and
fluid discharged from the flow channel flows through the gap and flows between the molten resin existing in the space and the part of the end face of the tubular part so as to apply the fluid pressure to the molten resin existing in the space.

3. The film production apparatus according to claim 2, wherein fluid discharged from the flow channel presses the molten resin taken up by the chill roll against the chill roll.

4. The film production apparatus according to claim 2 or 3, wherein
a separate flow channel is bored in the tubular part so as to be in fluid communication with a part of the end face of the tubular part of the fluid chamber, and
fluid is discharged from the part of the end face of the tubular part via the separate flow channel so as to directly apply the fluid pressure to the molten resin existing in the space.

5. The film production apparatus according to claim 1, wherein
the fluid providing unit at least comprises a fluid chamber, the fluid chamber including a flow channel and a tubular part therearound,
the fluid chamber is provided to have a gap with the chill roll while letting the flow channel thereof face the space, and
fluid discharged from the flow channel directly applies the fluid pressure to the molten resin existing in the space.

6. The film production apparatus according to any one of claims 1 to 5, wherein
the fluid pressure of the fluid is controlled so that the molten resin existing in the space has a shortest length.

7. The film production apparatus according to any one of claims 1 to 6, wherein
the molten resin existing in the space has a length of 15 mm or less.

8. A method for producing a film by taking up molten resin extruded downward from an exit bored in a die by a rotating chill roll located below the exit and cooling the molten resin for solidification by the chill roll, comprising the steps of:
providing fluid to a space between the exit and the chill roll located below; and
taking up the molten resin by the chill roll while applying fluid pressure in a direction pushing back the molten resin existing in the space against displacement of the molten rein taken up in a rotational direction of the chill roll.

9. The method for producing a film according to claim 8, wherein
a fluid chamber including a flow channel and a tubular part therearound is provided to have a gap with the chill roll while letting a part of an end face of the tubular part thereof face the space, and
fluid discharged from the flow channel is allowed to flow through the gap and flow between the molten resin existing in the space and the part of the end face of the tubular part so as to apply the fluid pressure to the molten resin existing in the space.

10. The method for producing a film according to claim 9, wherein
fluid discharged from the flow channel presses the molten resin taken up by the chill roll against the chill roll.

11. The method for producing a film according to claim 9 or 10, wherein
a separate flow channel is bored in the tubular part so as to be in fluid communication with a part of the end face of the tubular part of the fluid chamber, and
fluid is discharged from the part of the end face of the tubular part via the separate flow channel so as to directly apply the fluid pressure to the molten resin existing in the space.

12. The method for producing a film according to claim 8, wherein
a fluid chamber including a flow channel and a tubular part therearound is provided to have a gap with the chill roll while letting the flow channel thereof face the space, and
fluid discharged from the flow channel directly applies the fluid pressure to the molten resin existing in the space.

13. The method for producing a film according to any one of claims 8 to 12, wherein
the fluid pressure of the fluid is controlled so that the molten resin existing in the space has a shortest length.

14. The method for producing a film according to any one of claims 8 to 13, wherein
the molten resin existing in the space has a length of 15 mm or less.
